# EUROPÄISCHE PATENTSCHRIFT

(11) **EP 3 658 785 B1**
(45) Veröffentlichungstag und Bekanntmachung des Hinweises auf die Patenterteilung: **13.01.2021**
(21) Anmeldenummer: 17786899.9
(22) Anmeldetag: 18.10.2017
(51) Int. Cl.: F16B 3/06, F16B 5/02, F16B 31/04, F16B 5/06

(54) **SPREIZBOLZEN SOWIE VERBINDUNGSANORDNUNG MIT EINEM SOLCHEN SPREIZBOLZEN**
EXPANSION BOLT, AND CONNECTION ASSEMBLY COMPRISING SUCH AN EXPANSION BOLT
BOULON D'ÉCARTEMENT ET ENSEMBLE DE LIAISON COMPORTANT UN TEL BOULON D'ÉCARTEMENT

(43) Veröffentlichungstag der Anmeldung: 03.06.2020
(73) Patentinhaber: HEICO Befestigungstechnik GmbH, 59469 Ense-Niederense (DE)
(72) Erfinder: SCHNEIDER, Norbert, 59469 Ense-Niederense (DE)
(74) Vertreter: Haverkamp, Jens
(86) Internationale Anmeldenummer: PCT/EP2017/076545
(87) Internationale Veröffentlichungsnummer: WO 2019/076446

(56) Entgegenhaltungen:
- EP-B1- 2 191 150
- US-A1- 2014 348 613

## Beschreibung

Die Erfindung betrifft einen Spreizbolzen umfassend
- einen Bolzen mit einem endseitigen Verankerungsmittel zum zugfesten Verankern des Bolzens an oder in einem ersten Montageteil, welcher Bolzen einen kegelstumpfförmigen Konusabschnitt und einen Bolzengewindeabschnitt in seinem dem Verankerungsmittel gegenüberliegenden Endabschnitt mit einer darauf aufgeschraubten Mutter aufweist,
- eine Spreizhülse mit zylindrischer Mantelfläche und mit einer mit dem Konusabschnitt des Bolzens zusammenwirkenden Innenkonuskontur und
- eine sich an einem zweiten Montageteil abstützende Spanneinrichtung zum Aufweiten der Spreizhülse und zum Aufbringen einer axialen Spannkraft auf die miteinander zu verbindenden Montageteile.
Gegenstand der Erfindung ist ferner eine Verbindungsanordnung umfassend einen solchen Spreizbolzen und zwei miteinander zu verspannende Montageteile.

Spreizbolzen werden zum Herstellen von formschlüssigen Verbindungen etwa von Flanschverbindungen eingesetzt, wenn besonders hohe Kräfte zu übertragen sind. Ein Anwendungsgebiet für derartige Spreizbolzen sind Windkraftanlagen, etwa zum Anschließen einer Ausgleichskupplung mit ihrer einen Seite an die durch den Rotor angetriebene Antriebswelle und mit ihrer anderen Seite an eine Generatorwelle, wobei letztere typischerweise unter Zwischenschaltung eines Getriebes an den Generator angeschlossen ist. Eine solche Ausgleichskupplung dient zum Ausgleichen von axialem, radialem oder winkligem Wellenversatz.

Vielfach werden für derartige formschlüssige Verbindungen Spreizbolzen eingesetzt, die mit ihrem Bolzen in eine Sackbohrung eingreifen. Ein Spreizbolzen der in Rede stehenden Art umfasst einen Bolzen, der als Verankerungsmittel ein Gewindeabschnitt aufweisen kann, mit dem dieser in einem in eine Sackbohrung eines ersten Montageteils eingebrachte Innengewindebohrung festgelegt wird. Erforderlich ist eine in axialer Richtung des Bolzens wirkende Verankerung zum Aufbringen der gewünschten Zugkräfte beim Spannen desselben. Dieser Bolzen verfügt über einen kegelstumpfförmigen Konusabschnitt, der auf eine auf diesem sitzende Spreizhülse mit einer komplementären Innenkonuskontur wirkt. Der Konusabschnitt ist von dem Verankerungsmittel des Bolzens wegweisend verjüngt. Die Verjüngung ist damit in Richtung zu Mündung der Sackbohrung ausgeführt. Durch Bewegen der Spreizhülse gegenüber dem Bolzen in axialer Richtung kann erstere aufgeweitet werden. Die Spreizhülse ist typischerweise geschlitzt. Ein solcher Spreizbolzen ist aus EP 2 191 150 B1 bekannt. Bei diesem vorbekannten Spreizbolzen trägt die Spreizhülse in ihrem aus einer Montagebohrung herausragenden Abschnitt ein Außengewinde. An dem als Gewindeabschnitt ausführten Verankerungsmittel gegenüberliegenden Ende trägt der Bolzen einen Gewindeabschnitt, auf dem eine Spannmutter, typischerweise mit einer äußeren Werkzeugkontur zum Ansetzen eines Spannwerkzeuges aufgeschraubt ist. Auf den Außengewindeabschnitt der Spreizhülse ist eine Klemmmutter aufgeschraubt. Nach Festsetzen des Bolzens mit seinem als Gewindeabschnitt ausgeführten Verankerungsmittel in der Sackbohrung eines ersten Montageteils wird die Spreizhülse in die Montagebohrung eingesetzt. Hierbei ist Sorge dafür zu tragen, dass zwischen der Klemmmutter und der Außenseite des zweiten Montageteils ein Spalt verbleibt. Anschließend wird die Spannmutter auf den Bolzengewindeabschnitt aufgeschraubt, bis diese zur Anlage an der Spreizhülse gelangt. Durch weiteres Aufschrauben wird vordem Hintergrund der Verankerung des Bolzens in dem Sackloch die Spreizhülse in die Montagebohrung entgegen der zur Spannschraube gerichteten Verjüngung des Konusabschnittes sowie der Innenkonuskontur der Spreizhülse eingepresst. Dieses bedingt ein Aufweiten der Spreizhülse bis der vorbeschriebene Spalt geschlossen ist. Über die Spaltweite zwischen der Klemmmutter und der Außenseite des zweiten Montageteils vor dem Spannen der Spannmutter ist die radiale Pressung, die über die Spreizhülse in die die Montagebohrung umgebende Wand der beiden zu verspannenden Montageteile eingebracht wird, einrichtbar. Ein weiteres Spannen der Spannmutter nach Schließen des Spaltes erzeugt die gewünschte Axialkraft auf die miteinander zu verspannenden Montageteile.

Derartige Spreizbolzen müssen, etwa bei Wartungsarbeiten, gelöst werden. Bei diesem vorbekannten Spreizbolzen ist ein Abziehwerkzeug erforderlich, welches nach Entfernen der Spannmutter zum Beispiel auf ein Außengewinde der Klemmmutter aufgeschraubt wird, um die Spreizhülse aus der Montagebohrung unter Aufhebung des Klemmschlusses mit dem Konusabschnitt des Bolzens herausziehen zu können. Der bei diesem Spreizbolzen notwendige Einsatz eines Abziehwerkzeuges zum Lösen des Spreizbolzens wird auf Grund der Handhabung des Abziehwerkzeuges selbst und der zahlreichen durchzuführenden Handgriffe mitunter als aufwendig angesehen. Die zum Lösen benötigte Zeit ist, vor allem wenn bei einer solchen Ausgleichskupplung eine Vielzahl von Spreizbolzens gelöst werden müssen, recht zeitaufwendig. Bei Anwendungen, wie vorstehend beispielhaft im Zusammenhang mit einer Windkraftanlage beschrieben, ist der Einbauraum für derartige Spreizbolzen bzw. deren aus den Montagebohrungen herausragende Bestandteile typischerweise beschränkt, was die Handhabung eines Abziehwerkzeuges zusätzlich erschwert.

Ist der Einbauraum begrenzt, bereitet es mitunter erhebliche Schwierigkeiten, vor allem bei im Durchmesser größeren Spreizbolzen, über eine Sechskantspannmutter die notwendige Spannkraft aufzubringen, jedenfalls nicht manuell. Bei beengten Einbauverhältnissen können, wie bereits angedeutet, hydraulische oder anderweitig angetriebene Spannwerkzeuge oftmals nicht eingesetzt werden.

Ausgehend von diesem diskutierten Stand der Technik liegt der Erfindung daher die Aufgabe zu Grunde, einen Spreizbolzen der eingangs genannten Art dergestalt weiterzubilden, dass nicht nur ein Lösen desselben grundsätzlich vereinfacht ist, sondern auch ein Spannen desselben.

Gelöst wird diese Aufgabe erfindungsgemäß durch einen eingangs genannten, gattungsgemäßen Spreizbolzen, bei dem der Konusabschnitt des Bolzens in Richtung zu seinem Verankerungsmittel und die Innenkonuskontur der Spreizhülse in dieselbe Richtung verjüngt sind, bei dem die Spreizhülse an ihrem der Innenkonuskontur gegenüberliegenden Ende einen in radialer Richtung nach außen abragenden Spannflansch trägt und bei dem die Spanneinrichtung einen Spannring mit einer axialen Durchgangsöffnung, wobei die Spreizhülse die Durchgangsöffnung, eine Verstellbarkeit der Spreizhülse gegenüber dem Spannring in axialer Richtung gestattend, durchgreift und mit ihrem Spannflansch einen die Durchgangsöffnung einfassenden Randbereich der Spanneinrichtung überragt, sowie mehrere umfänglich verteilt angeordnete Druckbolzen aufweist, die mit ihrem Gewinde in axialer Richtung den Spannring durchgreifende Innengewindebohrungen kämmen und zum Aufweiten der Spreizhülse und zum Aufbringen einer axialen Spannkraft auf die miteinander zu verspannenden Montageteile mit ihrem Fuße unmittelbar oder mittelbar gegen das zweite Montageteil wirken.

Gelöst wird diese Aufgabe ebenfalls durch eine Verbindungsanordnung mit den Merkmalen des Anspruchs 11, die einen solchen Spreizbolzen umfasst.

Bei diesem Spreizbolzen ist der Konusabschnitt des Bolzens in Richtung zu seinem Verankerungsmittel verjüngt. In dieselbe Richtung ist ebenfalls die Innenkonuskontur der Spreizhülse verjüngt. Ein Spannen des Spreizbolzens erfolgt somit im Unterschied zu dem aus EP 2 191 150 B1 bekannten Spreizbolzen durch Anlegen einer Zugkraft auf die Spreizhülse. Zu diesem Zweck trägt die Spreizhülse an ihrem der Innenkonuskontur gegenüberliegenden Ende einen in radialer Richtung nach außen abragenden Spannflansch. An diesem ist eine Spanneinrichtung abgestützt, die gegen die Außenseite des zweiten Montageteils wirkt, und zwar entweder mittelbar oder unmittelbar. Mittelbar wirkt die Spanneinrichtung auf das zweite Montageteil, wenn eine Druckscheibe zwischengeschaltet ist. Die Spanneinrichtung selbst umfasst einen Spannring mit einer Durchgangsöffnung. Die Spreizhülse durchgreift diese Durchgangsöffnung, und zwar dergestalt, dass die Spreizhülse in der Durchgangsöffnung in axialer Richtung gegenüber dem Spannring bewegt werden kann. Mithin ist die Spanneinrichtung bei diesem Spreizbolzen nicht an die Spreizhülse angeschlossen. Der Spannflansch überragt die die Durchgangsöffnung begrenzenden Randbereiche des Spannrings. Mehrere umfänglich verteilt angeordnete Druckbolzen dienen zum Spannen der Spanneinrichtung. Diese kämmen das Innengewinde jeweils einer den Spannring durchgreifenden und mit einem Innengewinde ausgerüsteten Bohrungen. Mit ihrem Fuß stützen sich die Spannschrauben entweder auf einer Druckscheibe oder unmittelbar an der Oberfläche des zweiten Montageteils ab. Wird die Spanneinrichtung gespannt, wird die zum Verspannen des Spreizbolzens benötigte Zugkraft über den Spannflansch in die Spreizhülse eingebracht. Der Einsatz einer Mehrzahl an Druckbolzen erlaubt ein Aufbringen höchster Spannkräfte auch ohne maschinelle Spannwerkzeuge, da die aufzubringende Spannkraft einerseits auf die Mehrzahl der Druckbolzen aufgeteilt wird und andererseits das erforderliche Anziehdrehmoment sich mit der dritten Potenz des Durchmessers verringert.

Von Vorteil bei diesem Spreizbolzen ist, dass die Spreizhülse kein Außengewinde aufweisen muss. Gerade bei im Durchmesser größeren Spreizbolzen ist dieses aufwendig, ebenso wie das Schneiden eines komplementären Innengewindes in einer Klemmmutter, wie dieses beim Stand der Technik vorgesehen ist.

Auch bei diesem Spreizbolzen sitzt auf dem Bolzengewindeabschnitt eine Mutter. Diese dient jedoch nicht zum Spannen, sondern lediglich zum Bereitstellen eines Spannwiderlagers, über das in den Bolzen die axiale Spannkraft eingeleitet wird. Diese Mutter wird im Gegensatz zur vorbekannten Bauart unter Last nicht bewegt, so dass dazu keine hydraulischen oder anderweitig angetriebenen Werkzeuge erforderlich sind.

Vor dem eigentlichen Spannen der Spanneinrichtung ist diese so eingerichtet, dass zwischen dem Spannflansch der Spreizhülse und der auf dem Bolzengewindeabschnitt sitzenden Mutter ein Spalt verbleibt. Diese Spaltweite definiert die in die Montagebohrung einzubringende Radialpressung, mithin das Maß des Aufweitens der Spreizhülse. Ist im Zuge des Spannens der Spanneinrichtung die Spreizhülse soweit aus der Montagebohrung herausgezogen und in diesem Zuge aufgeweitet worden, dass dessen Spannflansch an der Widerlagermutter zur Anlage gebracht ist, wird durch weiteres Spannen der Spanneinrichtung die Axialspannung in den Bolzen und somit in die miteinander zu verspannenden Montageteile eingebracht.

Ein Lösen dieses Spreizbolzens ist denkbar einfach. In einem ersten Schritt wird die Spanneinrichtung entspannt. Dabei wird der Spannring von dem Spannflansch der Spreizhülse wegbewegt. Anschließend ist ein Lösen der Spreizhülse mit ihrer Innenkonuskontur von dem Konusabschnitt des Bolzens entweder dadurch möglich, dass die auf dem Bolzengewindeabschnitt sitzende Mutter weiter auf das Gewinde aufgeschraubt und somit gespannt wird, was zu einem Einpressen der Spreizhülse in die Montagebohrung führt. Dadurch wird der Klemmschluss zwischen dem Konusabschnitt des Bolzens und der Innenkonuskontur der Spreizhülse gelöst. Somit erfolgt beim Gegenstand dieses Spreizbolzens ein Lösen desselben durch entsprechendes Einpressen der Spreizhülse in die Montagebohrung in Richtung der Verjüngung des Konusabschnittes. Alternativ kann diese Mutter auch von dem Bolzengewindeabschnitt abgeschraubt und die Spreizhülse durch einen Hammerschlag in die Montageöffnung eingetrieben werden. Ist der Klemmschluss zwischen der äußeren Mantelfläche der Spreizhülse und der Wandung der Montagebohrung sowie innenseitig zwischen der Innenkonuskontur und dem Konusabschnitt gelöst, kann die Verankerung des Bolzens in oder an dem ersten Montageteil gelöst werden, um dann zunächst den Bolzen und anschließend die Spreizhülse aus der Montagebohrung herauszuziehen.

Die Spreizhülse ist typischerweise geschlitzt, und zwar mit einem oder mit zwei oder auch einer größeren Anzahl einander zur Längsachse diametral gegenüberliegenden Spreizschlitzen. Die Spreizhülse ist gemäß einem Ausführungsbeispiel an ihrem nicht zum Eingreifen in eine Montagebohrung vorgesehenen Abschnitt mit einem größeren Außendurchmesser ausgeführt, der vorzugsweise durch eine Erhöhung der Wandstärke der Spreizhülse bereitgestellt ist.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines Spreizbolzens nach Art einer Explosionsdarstellung,
- **Fig. 2:**: der zum Verspannen von zwei Montageteilen in eine Montagebohrung der beiden Montageteile eingesetzte Spreizbolzen vor einem Verspannen desselben und
- **Fig. 3:**: der zum Verspannen der beiden Montageteile der Figur 2 gespannte Spreizbolzen.

Ein Spreizbolzen 1 umfasst einen Bolzen 2, eine Spreizhülse 3 sowie eine Spanneinrichtung 4. Ferner verfügt der Spreizbolzen 1 über eine Widerlagermutter 5. Der Bolzen 2 trägt an seinem ersten Ende einen Gewindeabschnitt 6, der bei dem dargestellten Ausführungsbeispiel als Verankerungsmittel zum Festlegen des Bolzens 2 an einem ersten Montageteil dient. Das erste Montageteil verfügt zu diesem Zweck über eine Sackbohrung mit einem entsprechend komplementär ausgeführten Innengewindeabschnitt. Der den Gewindeabschnitt 6 gegenüberliegende Endabschnitt des Bolzens 2 ist als Bolzengewindeabschnitt 7 ausgeführt. Auf den Bolzengewindeabschnitt 7 wird die Widerlagermutter 5 aufgeschraubt.

In seinem mittleren Abschnitt trägt der Bolzen 2 einen Konusabschnitt 8, dessen Länge von der gewünschten radialen Pressung und der Länge einer die miteinander zu verbindenden Montageteile ein- oder durchgreifende Montagebohrung abhängt. Der Konusabschnitt 8 ist in Richtung zu dem Gewindeabschnitt 6 hin mit geringem Winkel verjüngt. Der Konusabschnitt 8 ist durch einen im Durchmesser geringfügig reduzierten Verbindungsabschnitt 9 mit dem Gewindeabschnitt 6 und durch einen ebenfalls im Durchmesser etwas reduzierten Verbindungsabschnitt 10 mit dem Bolzengewindeabschnitt 7 verbunden. Durch Verändern der Längen dieser Verbindungsabschnitte kann der Spreizbolzen von Anwendung zu Anwendung an Montageteile mit unterschiedlicher Dicke modular angepasst werden. Benachbart zu dem Bolzengewindeabschnitt 7 trägt der Bolzen 2 einen angeformten Sechskantkopf 11, dessen Maximaldurchmesser kleiner als der Durchmesser des Bolzens 2 in seinem Bolzengewindeabschnitt 7 ist. Der Sechskantkopf 11 dient als Angriffsfläche für ein Werkzeug zum Festsetzen des Bolzens 2 mit seinem Gewindeabschnitt 6 in einer Gewindebohrung eines ersten Montageteils. Anstelle der bei dem dargestellten Ausführungsbeispiel als Sechskantkopf ausgeführten Werkzeugkontur kann der Bolzen auch eine andere Werkzeugkontur aufweisen, beispielsweise einen Vierkant oder auch eine in den Bolzen axial eingebrachte Werkzeugkontur, wie beispielsweise eine Innensechskantkontur oder dergleichen.

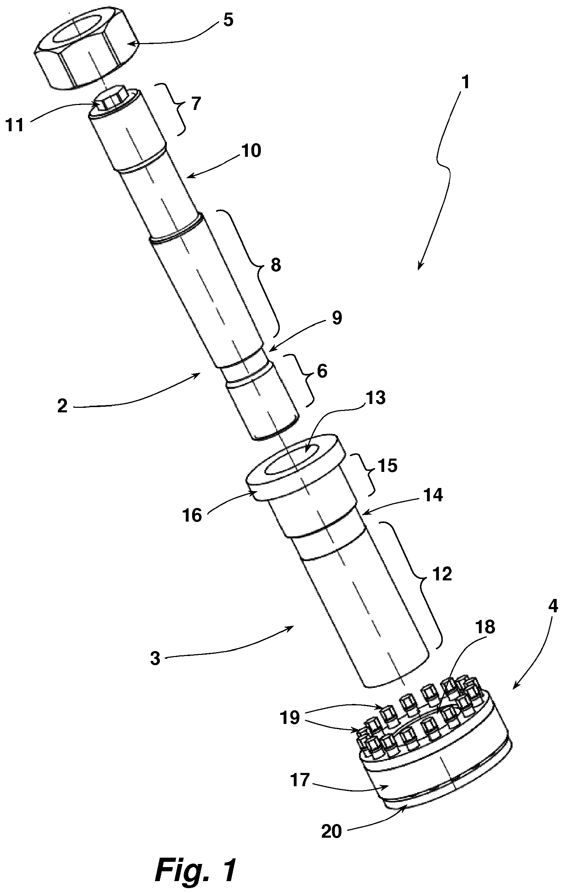

Die Spreizhülse 3 verfügt über einen Abschnitt 12 mit einer Mantelfläche, die die komplementäre Geometrie zur Geometrie der Montagebohrung 30 im Montageteil 22 und Sacklochbohrung 30 im Montageteile 21 besitzt. Die Mantelfläche der Spreizhülse 3 ist vorzugsweise zylindrisch. In den Abschnitt 12 ist ein der Längserstreckung der Spreizhülse 3 folgender Spreizschlitz (in den Figuren nicht dargestellt) eingebracht, wie dieser für Spreizhülsen bei Spreizbolzen üblich ist. Der Spreizschlitz gestattet ein Aufweiten des Abschnittes 12 der Spreizhülse 3. Die Spreizhülse 3 fasst einen zentralen Durchgangskanal 13 ein. Dieser Durchgangskanal 13 ist im Abschnitt 12 mit einer Innenkonuskontur versehen, die in einer komplementären Geometrie zu der Geometrie des Konusabschnittes 8 des Bolzens 2 ausgeführt ist. Somit ist die Innenkonuskontur der Spreizhülse 3 in ihrem Abschnitt 12 mit demselben Winkel in Richtung zu dem in Figur 1 gezeigten unteren Ende der Spreizhülse verjüngt wie der Konusabschnitt 8 des Bolzens 2. Somit liegt die Innenkonuskontur der Spreizhülse 3 flächig an dem Konusabschnitt 8 des Bolzens 2 an. Durch einen Verbindungsabschnitt 14 mit von Anwendung zu Anwendung veränderbarer Länge kann die Spreizhülse 3 an Montageteile mit unterschiedlicher Dicke modular angepasst werden. Daran anschließend verfügt die Spreizhülse 3 über einen Abschnitt 15, an dem die Spanneinrichtung 4 zentriert wird. Der in Figur 1 erkennbare obere Abschluss der Spreizhülse 3 ist durch einen in radialer Richtung über den Abschnitt 15 auskragenden Spannflansch 16 gebildet. Um die Steifigkeit der Spreizhülse 3 im Bereich des Spannflansches 16 zu erhöhen, hat Abschnitt 15 vorzugsweise einen gegenüber dem Durchmesser des Verbindungsabschnittes 14 und demjenigen des Abschnittes 12 vergrößerten Außendurchmesser. Durch diese Materialvergrößerung ist die Spreizhülse 3 in diesem Bereich stabiler ausgeführt, um bei Anlegen einer auf den Spannflansch 16 wirkenden Spannkraft der Spreizhülse 3 in diesem Bereich eine höhere Steifigkeit zu verleihen.

Der Innendurchmesser des Durchgangskanals 13 der Spreizhülse 3 ist auf den Durchmesser des Bolzens 2 abgestimmt, und zwar dergestalt, dass der Bolzen 2 mit seinem Gewindeabschnitt 6 die Spreizhülse 3 durchgreifen kann, so dass die Innenkonuskontur im Abschnitt 12 der Spreizhülse 3 an dem Konusabschnitt 8 des Bolzens 2 zur Anlage gelangt. Der Durchmesser des Durchgangskanals 13 bei dem dargestellten Ausführungsbeispiel im Bereich seines Abschnittes 15 und des Spannflansches 16 ist so bemessen, dass darin der Bolzengewindeabschnitt 7 des Bolzens 2 eintauchen kann.

Die Spanneinrichtung 4 umfasst einen Spannring 17 mit einer zentralen Durchgangsöffnung 18, durch die die Spreizhülse 3 geführt wird. Der Innendurchmesser der Durchgangsöffnung 18 ist so bemessen, dass die Spanneinrichtung 4 am Abschnitt 15 der Spreizhülse 3 zentriert wird. Im Spannring 17 sind eine Vielzahl von Druckbolzen 19 in axialen Durchgangsbohrungen in jeweils einem Innengewindeabschnitt gehalten. Die Druckbolzen 19 durchgreifen den Spannring 17 und stützen sich mit ihrem Fuße an einer ebenfalls als Ring ausgeführten Druckscheibe 20 ab. Werden die Druckbolzen 20 in die Innengewindeabschnitte des Spannrings 17 eingeschraubt, wird die Druckscheibe 20 von dem Spannring 17 wegbewegt, mithin der in Figur 1 zwischen dem Spannring des Spannrings 17 und der Druckscheibe 20 befindliche Spalt vergrößert. In einer in den Figuren nicht dargestellten Ausgestaltung ist in jeder Axialbohrung des Spannringes neben einem Druckbolzen ebenfalls ein Druckstift angeordnet, auf den der Druckbolzen wirkt und der beim Spannen der Spanneinrichtung gegen die an der Außenseite des benachbarten Montageteils sich abstützenden Druckscheibe wirkt.

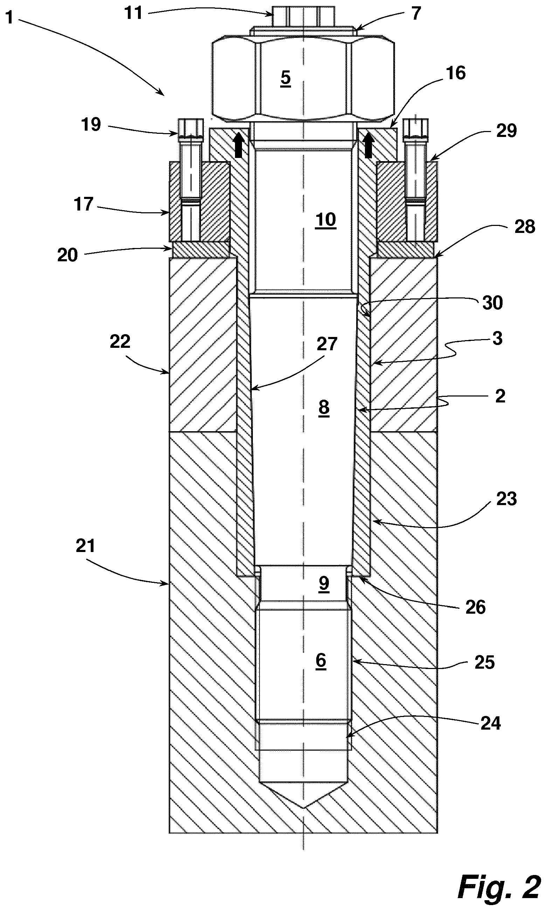

Figur 2 zeigt den Spreizbolzen 1 schematisiert in seiner noch nicht gespannten Stellung, wie er in zwei miteinander zu verspannenden Montageteilen 21, 22 eingebaut ist. Bei diesen Montageteilen kann es sich beispielsweise um die Wellenenden einer Wellenkupplung handeln. Das erste Montageteil 21 verfügt über eine gestuft ausgeführte Sackbohrung 23, in deren im Durchmesser kleineren unteren Abschnitt 24 ein Innengewinde 25 in komplementärer Ausführung zu dem Gewindeabschnitt 6 des Bolzens 2 eingeschnitten ist. Auf der durch die gestufte Ausbildung der Sackbohrung 3 gebildeten Stufe 26 liegt die Spreizhülse 3 mit ihrer unterseitigen Stirnfläche an. In der in Figur 2 gezeigten Längsschnittdarstellung ist die bereits zuvor angesprochene Innenkonuskontur 27 in dem Abschnitt 12 der Spreizhülse 3 erkennbar. Deutlich erkennbar ist, dass der Konusabschnitt 8 des Bolzens 2 und die Innenkonuskontur 27 der Spreizhülse 3 mit jeweils gleichem Verjüngungswinkel in Richtung zu dem Gewindeabschnitt 6 des Bolzens hin verjüngt sind und somit flächig aneinander liegen. Die beiden Montageteile 21, 22 grenzen mit einer Kontaktfläche axial aneinander. Die Spanneinrichtung 4 stützt sich mit ihrer Druckscheibe 20 an der äußeren Oberfläche 28 des zweiten Montageteils 22 ab. Der Spannring 17 fasst den Abschnitt 15 der Spreizhülse 3 ein. Die Spreizhülse 3 ist mit ihrem Abschnitt 15 nicht an den Spannring 17 angeschlossen. Der Spannflansch 16 überragt die von der Oberfläche 28 wegweisende Seite 29 des Spannrings 17, so dass die zu dem Spannring 17 weisende Unterseite des Spannflansches 16 auf der Oberseite 29 aufliegt. Das Maß des Übergriffes und somit die Größe der Kontaktfläche in axialer Richtung zwischen dem Spannflansch 16 der Spreizhülse 3 und dem Spannring 17 ist an die zu übertragenden Zugkräfte angepasst. Gleiches gilt für die Auslegung der Dicke des Spannflansches 16. Die Widerlagermutter 5 ist auf den Bolzengewindeabschnitt 7 des Bolzens 2 aufgeschraubt.

Die vorbeschriebenen Einzelteile des Spreizbolzens 1 werden wie folgt für die vorgesehene Verbindung der Montageteile 21, 22 zur Ausbildung einer formschlüssigen Verbindungsanordnung montiert. In einem ersten Schritt wird die Sackbohrung 23 mit einer das zweite Montageteil 22 durchgreifende Montagebohrung 30 in eine miteinander fluchtende Anordnung gebracht. Der Durchmesser der Montagebohrung 30 entspricht dem Durchmesser der Sackbohrung 23 in dem Abschnitt ihres größeren Durchmessers. Anschließend wird die Spanneinrichtung 4 auf den Abschnitt 15 der Spreizhülse 3 geschoben und dann die Spreizhülse 3 mit ihrer vorderseitigen Stirnfläche durch die Montagebohrung 30 bis zu der Stufe 26 der Sackbohrung 23 des ersten Montageteils 21 eingeführt. Hierdurch ist die Lage der beiden Montageteile 21, 22 zueinander in der Ebene ihrer Kontaktfläche fixiert. Anschließend wird der Bolzen 2 mit seinem Gewindeabschnitt 6 in den Durchgangskanal 13 der Spreizhülse 3 eingeführt, bis der Gewindeabschnitt 6 in Kontakt mit dem Innengewinde 25 der Sackbohrung 23 gelangt. Der Gewindeabschnitt 6 wird dann in das Innengewinde 25 eingeschraubt, um einen zugfesten Anschluss an das erste Montageteil 21 herzustellen. Hierzu betätigt man sich typischerweise eines auf den Sechskantkopf 11 des Bolzens 2 aufgesetzten Werkzeuges. Der Bolzen 2 wird so weit eingeschraubt, bis der Konusabschnitt 8 des Bolzens 2 die Innenkonuskontur 27 der Spreizhülse 3 kraftfrei berührt. Anschließend wird er Bolzen um einen vorgegebenen Drehwinkel zurückgedreht, so dass aufgrund der Gewindesteigung des Gewindeabschnitts 6 die Spreizhülse 3 ein definiertes Axialspiel entsteht. Dieses Axialspiel ist zum späteren Lösen des Spreizbolzens 1, falls gewünscht, zweckmäßig. Auf den Bolzen 2 wird nun die Widerlagermutter 5 so weit aufgeschraubt, dass ein Spalt zwischen der zu dem Spannflansch 16 weisenden Seite der Widerlagermutter 5 und der Oberseite 29 des Spannflansches 16 verbleibt. Die Weite dieses Spaltes definiert den axialen Bewegungsweg, über den die Spreizhülse mit ihrem die Innenkonuskontur 27 tragenden Abschnitt 12 aufgeweitet werden kann, plus das zuvor eingestellte Axialspiel.

Zum Verspannen des Spreizbolzens 1 werden die Druckbolzen 19 manuell oder mit einem entsprechenden Spannwerkzeug gespannt, wodurch der Spannring 17 von der Druckscheibe 16 wegbewegt wird. Auf Grund des Übergriffes des Spannflansches 16 über die Oberseite 29 des Spannrings 17 wird die Spreizhülse 3 im Zuge dieser Bewegung aus der Montagebohrung 30 herausgezogen. Auf Grund der Verankerung des Bolzens 2 mit seinem Gewindeabschnitt 6 in dem Innengewinde 25 verbleibt dieser ortsfest. Durch diese Relativbewegung zwischen der Spreizhülse 3 und dem Bolzen 2 wird die Spreizhülse 3 in radialer Richtung durch ihren Kontakt zu dem Konusabschnitt 8 aufgeweitet, um auf diese Weise die gewünschte radiale Pressung in die Wandung der Bohrungen 23, 30 einzubringen. Die Bewegung der Spreizhülse 3 beim Spannen der Spanneinrichtung 4 ist in Figur 2 durch Blockpfeile kenntlich gemacht.

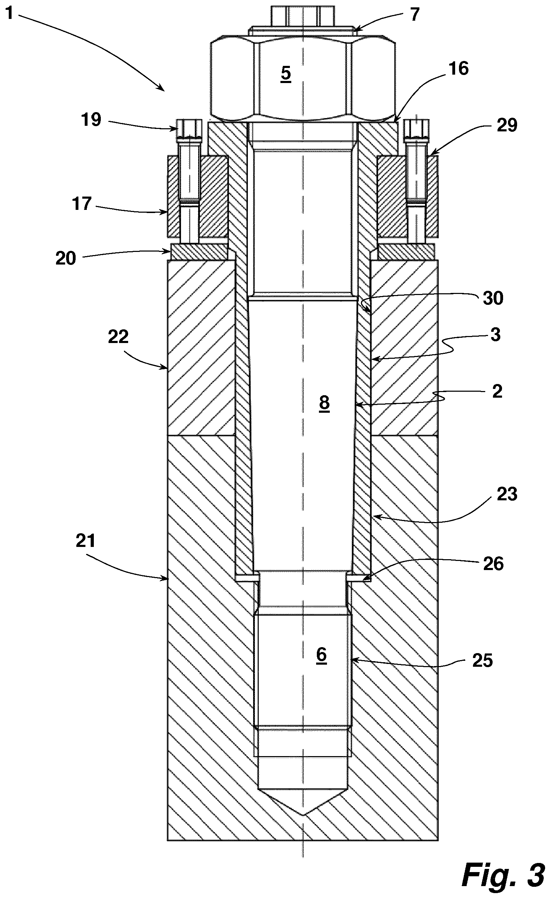

Die Aufweitbewegung der Spreizhülse 3 endet sobald der Spannflansch 16 an der Unterseite der Widerlagermutter 5 zur Anlage gelangt. Diese Spannstellung ist in Figur 3 gezeigt. Die Bewegung der Spreizhülse 3 durch den vorbeschriebenen Prozess ist auch durch die Beabstandung der unteren Stirnfläche der Spreizhülse 3 von der Stufe 26 erkennbar. Der Spannvorgang ist jedoch noch nicht beendet, wenn der Spannflansch 16 an der Unterseite der Widerlagermutter 5 anstößt. Ein weiteres Spannen der Druckbolzen 19 setzt die Verbindungsanordnung, bestehend aus dem Spreizbolzen 1 und den beiden Montageteilen 21, 22 unter eine axiale Spannung. Mithin werden die beiden Montageteile 21, 22 in axialer Richtung miteinander verspannt. Der Spannvorgang wird beendet, wenn die Druckbolzen 19 mit einem vorgegebenen Drehmoment gespannt worden sind.

Für den Fall, dass die vorbeschriebene Verbindungsanordnung wieder gelöst werden soll, wird in einem ersten Schritt die Spanneinrichtung 4 durch Lösen der Druckbolzen 19 gelöst. Der Spannring 17 wird hierdurch in Richtung zu der Druckscheibe 20 bewegt. Um den Klemmschluss zwischen dem Konusabschnitt 8 des Bolzens 2 und der Innenkonuskontur 27 der Spreizhülse 3 aufzuheben, kann die Widerlagermutter 5 auf dem Gewindeabschnitt 7 weiter aufgeschraubt werden, wodurch die Spreizhülse 3 in die Montagebohrung 30 bzw. die Sackbohrung 23 eingedrückt wird, bis die Spreizhülse 3 aufgrund des anfangs eingestellten Axialspiels kraftfrei ist. Das Widerlager hierzu bildet der Bolzen 2, dessen Bolzengewindeabschnitt 7 die Widerlagermutter 5 kämmt. Ist der Klemmschluss gelöst, kann der Bolzen 2 mit seinem Gewindeabschnitt 6 aus dem Innengewinde 25 des ersten Montageteils 21 herausgeschraubt werden.

Ein Lösen der Verbindungsanordnung kann auch dadurch herbeigeführt werden, dass nach Lösen der Spanneinrichtung 4 die Widerlagermutter 5 von dem Bolzengewindeabschnitt 7 abgeschraubt und die Spreizhülse 3 mit einem auf die Oberseite der des Spannflansches 16 gerichteten Hammerschlag in die Montagebohrung 30 und die Sackbohrung 23 eingetrieben wird.

Ist zu befürchten, dass die Widerlagermutter 5 auf dem Bolzengewindeabschnitt 7 auf Grund von Korrosionserscheinungen oder dergleichen im Zeitpunkt des Lösens nicht mehr bewegt werden kann, kann der Bolzengewindeabschnitt 7 etwas länger ausgeführt sein, um einen Gewindeabschnitt für den Anschluss eines Abdrückers bereit zu stellen. Ein solcher Abdrücker verfügt über einen Mutternkörper mit einer zentralen Durchgangsöffnung mit einem Innengewinde, welches auf den dann verlängerten Bolzengewindeabschnitt 7 aufgeschraubt werden kann. In diesem Mutternkörper sind mehrere Druckbolzen in jeweils einem Innengewinde gehalten ähnlich wie bei der Spanneinrichtung 4. Diese sind so angeordnet, um an den Werkzeugflächen der Widerlagermutter 5 vorbei sich auf der zu der Widerlagermutter 5 weisenden Oberseite 29 des Spannflansches 16 abzustützen. Bei einer Betätigung dieser Druckbolzen wird die Spreizhülse 3 in die Montagebohrung 30 und entsprechend in die Sackbohrung 23 eingepresst, um den zuvor beim Spannen des Spreizbolzens hergestellten Kraftschluss zu lösen. Dadurch wird auch die Widerlagermutter 5 kraftfrei, so dass sie sich nun leichter lösen lässt.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten die Erfindung umzusetzen, ohne dass dieses im Rahmen dieser Ausführungen im Einzelnen erläutert werden müsste.

### Bezugszeichenliste

- 1: Spreizbolzen
- 2: Bolzen
- 3: Spreizhülse
- 4: Spanneinrichtung
- 5: Widerlagermutter
- 6: Gewindeabschnitt
- 7: Bolzengewindeabschnitt
- 8: Konusabschnitt
- 9: Verbindungsabschnitt
- 10: Verbindungsabschnitt
- 11: Sechskantkopf
- 12: Abschnitt
- 13: Durchgangskanal
- 14: Verbindungsabschnitt
- 15: Abschnitt
- 16: Spannflansch
- 17: Spannscheibe
- 18: Durchgangsöffnung
- 19: Druckschraube
- 20: Druckscheibe
- 21: Montageteil
- 22: Montageteil
- 23: Sackbohrung
- 24: Abschnitt
- 25: Innengewinde
- 26: Stufe
- 27: Innenkonuskontur
- 28: Oberfläche
- 29: Oberseite
- 30: Montagebohrung

## Patentansprüche

1. Spreizbolzen umfassend
- einen Bolzen (2) mit einem endseitigen Verankerungsmittel (6) zum zugfesten Verankern des Bolzens (2) an oder in einem ersten Montageteil (1), welcher Bolzen (2) einen kegelstumpfförmigen Konusabschnitt (8) und einen Bolzengewindeabschnitt (7) in seinem dem Verankerungsmittel (6) gegenüberliegenden Endabschnitt mit einer darauf aufgeschraubten Mutter (5) aufweist,
- eine Spreizhülse (3) mit zylindrischer Mantelfläche und mit einer mit dem Konusabschnitt des Bolzens (2) zusammenwirkenden Innenkonuskontur (27) und
- eine sich an einem zweiten Montageteil (22) abstützende Spanneinrichtung (4) zum Aufweiten der Spreizhülse (3) und zum Aufbringen einer axialen Spannkraft auf die miteinander zu verbindenden Montageteile (21, 22),
**dadurch gekennzeichnet, dass** der Konusabschnitt (8) des Bolzens (2) in Richtung zu seinem Verankerungsmittel (6) und die Innenkonuskontur (27) der Spreizhülse (3) in dieselbe Richtung verjüngt sind, dass die Spreizhülse (3) an ihrem der Innenkonuskontur (27) gegenüberliegenden Ende einen in radialer Richtung nach außen abragenden Spannflansch (16) trägt und dass die Spanneinrichtung (4) einen Spannring (17) mit einer axialen Durchgangsöffnung (18), wobei die Spreizhülse (3) die Durchgangsöffnung (18), eine Verstellbarkeit der Spreizhülse (3) gegenüber dem Spannring (17) in axialer Richtung gestattend, durchgreift und mit ihrem Spannflansch (16) einen die Durchgangsöffnung einfassenden Randbereich der Spanneinrichtung (4) überragt, sowie mehrere umfänglich verteilt angeordnete Druckbolzen (19) aufweist, die mit ihrem Gewinde in axialer Richtung den Spannring (17) durchgreifende Innengewindebohrungen kämmen und zum Aufweiten der Spreizhülse (3) und zum Aufbringen einer axialen Spannkraft auf die miteinander zu verspannenden Montageteile (21, 22) mit ihrem Fuße unmittelbar oder mittelbar gegen das zweite Montageteil (22) wirken.

2. Spreizbolzen nach Anspruch 1, **dadurch gekennzeichnet, dass** die Spanneinrichtung (4) über eine Druckscheibe (20) mit einer axialen Durchgangsöffnung verfügt, wobei die Spreizhülse (3) auch diese Durchgangsöffnung durchgreift, und sich die Druckbolzen (19) mit ihrem Fuß auf der einen Oberseite der Druckscheibe (20) unmittelbar oder mittelbar abstützen, während die andere Oberseite der Druckscheibe (20) an dem zweiten Montageteil (22) anliegt.

3. Spreizbolzen nach Anspruch 1 oder 2, **dadurch gekennzeichnet, dass** die Spreizhülse (3) geschlitzt ist.

4. Spreizbolzen nach einem der Ansprüche 1 bis 3, **dadurch gekennzeichnet, dass** die Spreizhülse (3) an ihrem aus der Montagebohrung des zweiten Montageteils (22) herausragenden Abschnitt (15) einen gegenüber dem Durchmesser in dem in eine Montagebohrung (30) hineinreichenden Abschnitt größeren Außendurchmesser aufweist.

5. Spreizbolzen nach Anspruch 4, **dadurch gekennzeichnet, dass** der größere Außendurchmesser in dem Abschnitt (15) der Spreizhülse (3) durch eine erhöhte Wandstärke in diesem Abschnitt (15) erreicht ist.

6. Spreizbolzen nach Anspruch 1 oder 2, **dadurch gekennzeichnet, dass** der Spannring 17 mit seiner Durchgangsöffnung (18) am Abschnitt (15) der Spreizhülse (3) zentriert ist.

7. Spreizbolzen nach einem der Ansprüche 1 bis 6, **dadurch gekennzeichnet, dass** die auf den Bolzengewindeabschnitt (7) aufgeschraubte Mutter (5) eine Mutter mit einer außenseitigen Werkzeugangriffskontur ist.

8. Spreizbolzen nach Anspruch 7, **dadurch gekennzeichnet, dass** der Außendurchmesser des Spannflansches (16) der Spreizhülse (3) dem maximalen Außendurchmesser der auf den Bolzengewindeabschnitt (7) aufgeschraubten Mutter (5) entspricht.

9. Spreizbolzen nach einem der Ansprüche 1 bis 8, **dadurch gekennzeichnet, dass** das Verankerungsmittel (6) ein Gewindeabschnitt ist.

10. Spreizbolzen nach einem der Ansprüche 1 bis 8, **dadurch gekennzeichnet, dass** das Verankerungsmittel (6) ein Bolzenkopf ist.

11. Verbindungsanordnung umfassend einen Spreizbolzen (1) nach einem der Ansprüche 1 bis 10 sowie zumindest zwei miteinander zu verspannende Montageteile (21, 22), **dadurch gekennzeichnet, dass** der Bolzen (2) des Spreizbolzens (1) mit seinem als Gewindeabschnitt aufgeführten Verankerungsmittel (6) in einer mit einem komplementären Innengewinde (25) ausgerüsteten Sackbohrung (23) des ersten Montageteils (21) festgelegt ist und benachbart zu der Innengewindebohrung (25) des ersten Montageteils (21) eine mit größeren Durchmesser ausgeführte Montagebohrung (30) angeordnet ist, die in demselben Durchmesser auch das zweite, mit dem ersten Montageteil (21) zu verspannende Montageteil (22) durchgreift und an der dem ersten Montageteil (21) gegenüberliegenden Außenseite (28) des zweiten Montageteils (22) die Spanneinrichtung (4) abgestützt ist und in verspannten Zustand mit ihrem Spannring (17) gegen den Spannflansch (16) der Spreizhülse (3) und der Spannflansch (16) gegen die auf den Bolzengewindeabschnitt (7) aufgeschraubte Mutter (5) wirkt.

## Claims

1. Expansion bolt, comprising
- a bolt (2) with an end-face anchoring means (6) for anchoring the bolt (2) on or in a first assembly part (1) in a tension-resistant manner, said bolt (2) having a truncated conical cone section (8) and a threaded bolt section (7) in the bolt end portion which lies opposite the anchoring means (6), with a nut (5) screwed thereon,
- an expansion sleeve (3) with a cylindrical lateral surface and with an inner conical contour (27) which interacts with the cone section of the bolt (2) and
- a clamping device (4) which is supported on a second assembly part (22) for expanding the expansion sleeve (3) and for applying an axial clamping force to the assembly parts (21, 22) which are to be connected together,
**characterised in that** the cone section (8) of the bolt (2) tapers in the direction towards its anchoring means (6), and the inner cone contour (27) of the expansion sleeve (3) tapers in the same direction, that the expansion sleeve (3) carries, on the end opposite the inner conical contour (27), a clamping flange (16) which protrudes outwards in the radial direction, and that the clamping device (4) comprises a clamping ring (17) with an axial through-opening (18), wherein the expansion sleeve (3) passes through the through-opening (18) so as to permit the expansion sleeve (3) to be adjusted in the axial direction relative to the clamping ring (17), and with its clamping flange (16) protrudes beyond a clamping device (4) edge region which surrounds the through-opening, as well as multiple pressing bolts (19) arranged distributed over the circumference, the threads of which mesh with inner threaded bores that pass through the clamping ring (17) in the axial direction, and the bases of which act directly or indirectly against the second assembly part (22) in order to expand the expansion sleeve (3) and apply an axial clamping force to the assembly parts (21, 22) which are to be clamped together.

2. Expansion bolt according to claim 1, **characterised in that** the clamping device (4) is provided with a thrust washer (20) with an axial through-opening, wherein the expansion sleeve (3) also engages through this through-opening, and the pressing bolts (19) are supported directly or indirectly with their bases on the one upper side of the thrust washer (20), while the other upper side of the thrust washer (20) is in contact on the second assembly part (22).

3. Expansion bolt according to claim 1 or 2, **characterised in that** the expansion sleeve (3) is slotted.

4. Expansion bolt according to any one of claims 1 to 3, **characterised in that** the expansion sleeve (3) comprises in its section (15), protruding from the assembly bore of the second assembly part (22), a section of greater outer diameter in relation to the diameter in the section extending into an assembly bore (30).

5. Expansion bolt according to claim 4, **characterised in that** the greater outer diameter in the section (15) of the expansion sleeve (3) is attained by an increased wall thickness in this section (15).

6. Expansion bolt according to claim 1 or 2, **characterised in that** the clamping ring (17) is centred with its through-opening (18) at the section (15) of the expansion sleeve (3).

7. Expansion bolt according to any one of claims 1 to 6, **characterised in that** the nut (5) screwed onto the threaded bolt section (7) is a nut with a tool engagement contour on its outside.

8. Expansion bolt according to claim 7, **characterised in that** the outer diameter of the clamping flange (16) of the expansion sleeve (3) corresponds to the maximum outer diameter of the nut (5) screwed onto the threaded bolt section (7).

9. Expansion bolt according to any one of claims 1 to 8, **characterised in that** the anchoring means (6) is a threaded section.

10. Expansion bolt according to any one of claims 1 to 8, **characterised in that** the anchoring means (6) is a bolt head.

11. Connection arrangement, comprising an expansion bolt (1) according to any one of claims 1 to 10, as well as at least two assembly parts (21, 22), **characterised in that** the bolt (2) of the expansion bolt (1) is secured by its anchoring means (6), configured as a threaded section, in a blind borehole (23) of the first assembly part (21), which is provided with a complementary inner thread (25), and that arranged adjacent to the inner threaded borehole (25) of the first assembly part (21) is an assembly borehole (30) configured with a larger diameter, which engages in the same diameter also through the second assembly part (22) which is to be clamped to the first assembly part (21), and the clamping device (4) is supported on the outer side (28) of the second assembly part (22) opposite the first assembly part (21), and in the clamped state takes effect with its clamping ring (17) against the clamping flange (16) of the expansion sleeve (3) and the clamping flange (16) takes effect against the nut (5) which is screwed onto the threaded bolt section (7).

## Revendications

1. Boulon d'écartement comprenant
- un boulon (2) avec un moyen d'ancrage (6) à l'extrémité, afin d'ancrer le boulon (2) en résistance à la traction sur ou dans une première pièce de montage (1), lequel boulon (2) présente un tronçon conique (8) en forme de cône émoussé et, sur son tronçon d'extrémité opposé au moyen d'ancrage (6), un tronçon de boulon à filetage (7) sur lequel est vissé un écrou (5),
- une douille d'écartement (3) avec une surface d'enveloppe cylindrique à contour conique intérieur (27) agissant conjointement avec le tronçon conique du boulon (2) et
- un dispositif de serrage (4), en appui sur une seconde pièce de montage (22), destiné à écarter la douille d'écartement (3) et à appliquer une force de serrage axiale sur les pièces de montage (21, 22) à assembler l'une avec l'autre,
**caractérisé en ce que** le tronçon conique (8) du boulon (2) se rétrécit en direction de son moyen d'ancrage (6) et le contour conique intérieur (27) de la douille d'écartement (3) se rétrécit dans la même direction, **en ce que** la douille d'écartement (3) supporte sur son extrémité opposée au contour conique intérieur (27) une bride de serrage (16) en saillie dans le sens radial vers l'extérieur et **en ce que** le dispositif de serrage (4) présente une bague de serrage (17) avec une ouverture de passage (18) axiale, laquelle douille d'écartement (3) traversant l'ouverture de passage (18) axiale, en offrant une possibilité d'ajustement dans le sens axial de la douille d'écartement (3) par rapport à la bague de serrage (17) et surplombant avec sa bride de serrage (16) une zone de bordure du dispositif de serrage laquelle entoure l'ouverture de passage ; et présente également plusieurs boulons de pression (19) répartis tout autour, lesquels s'accrochent par leur filetage aux filetages femelles traversant dans le sens axial la bague de serrage (17) et qui agissent par leur base, directement ou indirectement contre la seconde pièce de montage (22) afin d'écarter la douille d'écartement (3) et afin d'appliquer une force de serrage axiale sur les pièces de montage (21, 22) à assembler l'une avec l'autre par serrage.

2. Boulon d'écartement selon la revendication 1, **caractérisé en ce que** le dispositif de serrage (4) dispose d'un disque de pression (20) muni une ouverture de passage axiale, la douille d'écartement (3) traversant également cette ouverture de passage, et que les boulons de pression (19) s'appuient directement ou indirectement par leur base sur une face supérieure du disque de pression, tandis que l'autre face supérieure du disque de pression (20) est en appui sur la seconde pièce de montage (22).

3. Boulon d'écartement selon la revendication 1 ou 2, **caractérisé en ce que** la douille d'écartement (3) est fendue.

4. Boulon d'écartement selon l'une des revendications 1 à 3, **caractérisé en ce que** la douille d'écartement (3) présente sur son tronçon (15) qui dépasse du trou de montage de la seconde pièce de montage (22) un diamètre extérieur plus grand que le diamètre du tronçon qui s'engage dans un trou de montage.

5. Boulon d'écartement selon la revendication 4, **caractérisé en ce que** le diamètre extérieur plus grand dans le tronçon (15) de la douille d'écartement (3) est obtenu par une épaisseur de paroi plus importante dans ce tronçon (15).

6. Boulon d'écartement selon la revendication 1 ou 2, **caractérisé en ce que** la bague de serrage (17) avec son ouverture de passage (18) est centrée sur le tronçon (15) de la douille d'écartement (3).

7. Boulon d'écartement selon l'une des revendications 1 à 6, **caractérisé en ce que** l'écrou (5) vissé sur le tronçon de boulon à filetage (7) est un écrou présentant sur l'extérieur un contour d'engagement d'outil.

8. Boulon d'écartement selon la revendication 7, **caractérisé en ce que** le diamètre extérieur de la bride de serrage (16) de la douille d'écartement (3) correspond au diamètre extérieur maximal de l'écrou (5) vissé sur le tronçon de boulon à filetage (7).

9. Boulon d'écartement selon l'une des revendications 1 à 8, **caractérisé en ce que** le moyen d'ancrage (6) est un tronçon fileté.

10. Boulon d'écartement selon l'une des revendications 1 à 8, **caractérisé en ce que** le moyen d'ancrage (6) est une tête de boulon.

11. Dispositif de liaison comportant un boulon d'écartement (1) selon l'une des revendications 1 à 10 ainsi qu'au moins deux pièces de montage (21, 22) à serrer l'une avec l'autre, **caractérisé en ce que** le boulon (2) du boulon d'écartement (1) avec son moyen d'ancrage (6) réalisé en tant que tronçon fileté, est fixé dans un trou borgne (23) de la première pièce de montage (21) équipé d'un filetage intérieur (25) complémentaire et qu'au voisinage du trou à filetage intérieur (25) de la première pièce de montage (21) est placé un trou de montage (30) réalisé avec un diamètre plus grand, qui traverse avec le même diamètre également la seconde pièce de montage (22) à serrer avec la première pièce de montage (21) et que le dispositif de serrage (4) est en appui sur la face extérieure (28), opposée à la première pièce de montage (21), de la seconde pièce de montage (22) et, à l'état sous tension, agit par sa bague de serrage (17) contre la bride de serrage (16) de la douille d'écartement (3) et que la bride de serrage (16) agit contre l'écrou (5) vissé sur le tronçon de boulon à filetage (7).
